# EUROPEAN PATENT APPLICATION

(11) **EP 4 636 896 A1**
(43) Date of publication of application: **22.10.2025**
(21) Application number: 24854381.1
(22) Date of filing: 07.08.2024
(51) Int. Cl.: H01M 10/0585, H01M 10/0562, H01M 4/62, H01M 4/38, H01M 4/13, H01M 4/139, H01M 10/052

(54) **ALL-SOLID-STATE BATTERY AND MANUFACTURING METHOD THEREFOR**

(30) Priority: 14.08.2023 KR 20230106058; 06.08.2024 KR 20240104404
(71) Applicant: LG Energy Solution, Ltd., Seoul 07335 (KR)
(72) Inventor: LEE, Jieun, Daejeon 34122 (KR); KIM, Youngbok, Daejeon 34122 (KR); KIM, Yun Kyoung, Daejeon 34122 (KR); KIM, Donghyeon, Daejeon 34122 (KR)
(74) Representative: Goddar, Heinz J.
(86) International application number: PCT/KR2024/011649
(87) International publication number: WO 2025/037829

(57) **Abstract**

The present disclosuredisclosure relates to an all-solid-state battery and a method for manufacturing same, and more particularly, the performance of the all-solid-state battery can be improved by ensuring that the interior of the electrode adjacent to the sulfide-based solid electrolyte film is solvent-free, or the interior of the electrode contains a non-polar solvent, thereby reducing the interfacial resistance of the sulfide-based solid electrolyte film and the electrode.

## Description

### [Technical Field]

This application claims the benefit of priority to Korean Patent Application No. 10-2023-0106058, filed August 14, 2023, and Korean Patent Application No. 10-2024-0104404, filed August 6, 2024.

The present disclosure relates to an all-solid-state battery and a method of manufacturing the same.

### [Related Art]

A variety of batteries are being researched to overcome the limitations of current lithium secondary batteries in terms of capacity, safety, output, enlargement, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. It also has the advantage of being able to use Li metal or Li alloys as negative electrode materials, which can dramatically improve the energy density relative to the mass and volume of the battery.

Research is ongoing to realize all-solid-state batteries using sulfide-based solid electrolytes, which have high ionic conductivity and ductile properties, among solid electrolytes.

All-solid-state batteries containing sulfide-based solid electrolytes are typically manufactured by placing a sulfide-based solid electrolyte film between the positive electrode and the negative electrode, followed by pressing under high pressure. To fabricate an all-solid-state battery comprising a positive electrode, a sulfide-based solid electrolyte film, and a negative electrode, a sulfide-based solid electrolyte film can be used, typically in a free standing form, or a process of transferring the sulfide-based solid electrolyte film to an electrode, or overcoating the electrode with a sulfide-based solid electrolyte can be performed. Among these, overcoating the electrode with a sulfide-based solid electrolyte film has the advantage of increasing the efficiency of the process and enabling the realization of thin solid electrolyte films.

However, if a sulfide-based solid electrolyte film is overcoated on the electrode, the solvent in the electrolyte slurry may penetrate into the electrode, and small and light electrolyte particles or binders may be squeezed out and located at the interface of the electrode and the sulfide-based solid electrolyte film, causing an increase in interfacial resistance.

Therefore, when a sulfide-based solid electrolyte film is overcoated on an electrode, there is a need for a technology that can prevent the electrolyte slurry from being squeezed out and the solvent contained in the electrolyte slurry from penetrating into the electrode.

### [Prior Art Reference]

### [Patent Reference]

(Patent Reference 1) Japanese Patent No. 4046376

### [Detailed Description of the Invention]

### [Technical Problem]

The inventors of the present disclosure have conducted a multifaceted study to solve the above problems, and have discovered that, in an all-solid-state battery comprising a positive electrode, a sulfide-based solid electrolyte film, and a negative electrode, if the positive electrode or negative electrode to be overcoated by the sulfide-based solid electrolyte film is impregnated with a non-polar solvent in advance and then dried to become solvent-free, or if the non-polar solvent is retained, the solvent of the sulfide-based solid electrolyte slurry used for overcoating is prevented from being squeezed into the positive electrode or negative electrode, thereby reducing the interfacial resistance between the electrode and the electrolyte and improving the battery performance.

Accordingly, it is an object of the present disclosure to provide an all-solid-state battery in which the interfacial resistance between the positive electrode or negative electrode and the sulfide-based solid electrolyte film is reduced, thereby improving battery performance.

Another object of the present disclosure is to provide a method of manufacturing the all-solid-state battery.

### [Technical Solution]

To accomplish the above objectives, the present disclosure provides an all-solid-state battery comprising a positive electrode, a negative electrode, and a sulfide-based solid electrolyte film interposed therebetween, wherein the positive electrode active material layer or the negative electrode active material layer included in the positive electrode or negative electrode is solvent-free or contains a non-polar solvent, and wherein the non-polar solvent has a dielectric constant of 10 or less.

In one example of the present disclosure, the non-polar solvent may comprise at least one selected from the group consisting of toluene, xylene, anisole, benzene, hexane, heptane, nonane, decane, dibromomethane, dichloromethane, chloroform, butyrate, and acetate.

In one example of the present disclosure, the non-polar solvent may be included in an amount of 100 to 2000 ppm.

In one example of the present disclosure, the sulfide-based solid electrolyte film may comprise a sulfide-based solid electrolyte with an argyrodite structure.

In one example of the present disclosure, the sulfide-based solid electrolyte may comprise Li₇₋ₓPS₆₋ₓAₓ, wherein A is Cl, Br, I, Sn, or a combination thereof, and x is 0≤x≤2.

In one example of the present disclosure, the negative electrode active material layer may comprise lithium metal, or an anodeless coating layer.

The present disclosure also provides a method of forming a sulfide-based solid electrolyte film, comprising: (a) impregnating a positive electrode active material layer or a negative electrode active material layer included in the positive electrode or negative electrode with a non-polar solvent; (b) overcoating the positive electrode active material layer or the negative electrode active material layer obtained in step (a) above with a slurry for forming a sulfide-based solid electrolyte film to form a sulfide-based solid electrolyte film; and (c) drying the sulfide-based solid electrolyte film obtained in step (b) above, wherein the dielectric constant of the non-polar solvent is 10 or less.

In one example of the present disclosure, the slurry for forming a sulfide-based solid electrolyte film may be prepared by mixing a sulfide-based solid electrolyte in a solvent.

In one example of the present disclosure, the solvent is a non-polar solvent, and the non-polar solvent may have a dielectric constant of 10 or less.

In one example of the present disclosure, the slurry may further comprise a binder.

In one example of the present disclosure, the coating may be performed by bar coating, roll coating, gravure coating, doctor blade coating, slot die coating, slurry coating, or extrusion coating.

In one example of the present disclosure, the drying in step (c) may be performed at 40°C to 90°C.

### [Advantageous Effects]

According to the present disclosure, in an all-solid-state battery formed by overcoating a sulfide-based solid electrolyte film on a positive electrode or a negative electrode, the interior of the positive electrode or the negative electrode is solvent-free, or contains a non-polar solvent, so that the solvent of the slurry used in overcoating the sulfide-based solid electrolyte film is squeezed out and prevented from penetrating into the interior of the positive electrode or the negative electrode. Accordingly, the particulates of the components in the slurry that are squeezed together with the solvent are also not squeezed out, and the accumulation of particulates at the interface can be prevented. Furthermore, since these particulates do not accumulate at the interface of the positive electrode or negative electrode and the sulfide-based solid electrolyte film, the interfacial resistance is reduced, which can improve the performance of the all-solid-state battery.

### [Brief Description of Drawing]

FIG. 1 is a photograph illustrating the results of an experiment to select a solvent that does not cause side reactions with a sulfide-based solid electrolyte in the experimental example of the present disclosure.
FIG. 2 is a scanning electron microscope (SEM) photograph of the interface of an anodeless coating layer and a sulfide-based solid electrolyte film in an all-solid-state battery prepared in Example 1 and Comparative Example 1 of the present disclosure.

### [Best Mode]

Hereinafter, aspects of the present disclosure will be described in detail with reference to the accompanying drawings. In the drawings, all or part of the configuration can be exaggerated for convenience of description.

In one example of the present disclosure, the positive electrode included in the all-solid-state battery comprises a positive electrode active material layer, wherein the positive electrode active material layer may be formed on one side of the positive electrode current collector.

The positive electrode active material layer includes a positive electrode active material, a conductive material, and a binder. Further, the positive electrode active material layer may further comprise a sulfide-based solid electrolyte.

Furthermore, the positive electrode active material may be any material capable of reversibly adsorbing and releasing lithium ions, without being particularly limited thereto, for example, a layered compound such as lithium cobalt oxide (LiCoO₂), lithium nickel oxide (LiNiO₂), Li[NiₓCo_{y}Mn_{z}Mᵥ]O₂ (wherein M is any one or two or more elements selected from the group consisting of Al, Ga and In; and 0.3≤x<1.0, 0≤y, z≤0.5, 0≤v≤0.1, and x+y+z+v=1), Li(LiₐM_{b-a-b'}M'_{b'})O_{2-c}A_{c} (wherein 0≤a≤0.2, 0.6≤b≤1, 0≤b'≤0.2, and 0≤c≤0.2; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula Li_{1+y}Mn_{2-y}O₄ (wherein y is 0 to 0.33), LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇ ; a Ni site-type lithium nickel oxide represented by formula LiNi_{1-y}MyO₂ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or Li₂Mn₃MO₈ (wherein M is Fe, Co, Ni, Cu, or Zn); LiMn₂O₄, in which a portion of the Li in the formula is substituted by an alkaline earth metal ion; a disulfide compound; Fe₂(MoO₄)₃; and the like, but not limited thereto.

Further, the positive electrode active material may be included in an amount of 60 to 90% by weight based on the total weight of the positive electrode active material layer. Specifically, the content of the positive electrode active material may be 60% by weight or more, 65% by weight or more, or 70% by weight or more, 80% by weight or less, 85% by weight or less, or 90% by weight or less. If the content of the positive electrode active material is less than 60% by weight, the battery performance may be reduced, and if the content is greater than 90% by weight, the mass transfer resistance may be increased.

Further, the binder is as described above for the negative electrode.

Furthermore, the conductive material is as described above for the negative electrode.

Further, the specific material of the sulfide-based solid electrolyte may be the same as the description of the sulfide-based solid electrolyte included in the sulfide-based solid electrolyte film described above. However, the content of the sulfide-based solid electrolyte in the positive electrode active material layer may be 5 to 25% by weight, taking into account the ionic conductivity characteristics, and may be more particularly 5% by weight or more, 8% by weight or more, 10% by weight or more, 15% by weight or less, 20% by weight or less, or 25% by weight or less.

Further, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, copper, stainless steel, aluminum, nickel, titanium, palladium, calcined carbon, copper or stainless steel whose surface is treated with carbon, nickel, or silver, aluminum-cadmium alloy, and the like may be used as the positive electrode current collector.

The positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

The positive electrode as described above can be manufactured according to conventional methods, and more specifically, by applying a composition for forming a positive electrode active material layer prepared by mixing a positive electrode active material with a conductive material and a binder in an organic solvent on the positive electrode current collector and drying same, and optionally, compression molding same on the current collector to improve the electrode density. In this case, it is preferable to use an organic solvent that can uniformly disperse a positive electrode active material, a binder and a conductive material, and is easily evaporated. Specifically, the examples include acetonitrile, methanol, ethanol, tetrahydrofuran, water, and isopropyl alcohol.

### Method for Producing an All-solid-state battery

The present disclosure also relates to a method of manufacturing an all-solid-state battery.

A method of forming an all-solid-state battery comprises (a) impregnating a positive electrode active material layer or a negative electrode active material layer included in the positive electrode or negative electrode with a non-polar solvent; (b) overcoating the positive electrode active material layer or the negative electrode active material layer obtained in step (a) above with a slurry for forming a sulfide-based solid electrolyte film to form a sulfide-based solid electrolyte film; and (c) drying the sulfide-based solid electrolyte film obtained in step (b) above. The dielectric constant of the non-polar solvent may be 1 to 10.

Hereinafter, a method of manufacturing an all-solid-state battery according to the present disclosure will be described in more detail by each step.

The types, properties, and weights of the materials included in the positive electrode, negative electrode, and sulfide-based solid electrolyte film of the method for manufacturing an all-solid-state battery manufacturing method are the same as described above.

In one example of the present disclosure, in step (a) above, the positive electrode active material layer or the negative electrode active material layer included in the positive electrode or negative electrode may be impregnated with a non-polar solvent.

The positive electrode may be prepared by applying a slurry for forming a positive electrode active material layer on the positive electrode current collector and drying it.

Furthermore, the negative electrode may be prepared by applying a slurry for forming a negative electrode active material layer on the negative electrode current collector and drying it. The negative electrode active material layer may be an anodeless coating layer that does not include a negative electrode active material.

The method of impregnating the positive electrode active material layer or the negative electrode active material layer with a non-polar solvent is not particularly limited, provided that impregnation is performed by spraying with a non-polar solvent. For example, using a micropipette or spray, an appropriate amount of a non-polar solvent can be sprayed onto the positive electrode active material layer or negative electrode active material layer to impregnate it.

In one example of the present disclosure, in step (b) above, a sulfide-based solid electrolyte film may be formed by overcoating a slurry for forming a sulfide-based solid electrolyte film on the positive electrode active material layer or the negative electrode active material layer obtained in step (a) above.

The slurry for forming a sulfide-based solid electrolyte film is prepared by mixing sulfide-based solid electrolyte particles and a solvent, wherein the solvent may be a non-polar solvent having a dielectric constant of 1 to 10. The non-polar solvent may comprise at least one selected from the group consisting of butyrate, acetate, xylene and anisole. The slurry may be formulated to have a solids content of 45 to 60% by weight.

Furthermore, in the preparation of the slurry for forming a sulfide-based solid electrolyte film, a binder may be further mixed to improve the cohesion and mechanical properties.

Furthermore, the coating method for performing the overcoating may be bar coating, roll coating, gravure coating, doctor blade coating, slot die coating, slurry coating, or extrusion coating, but is not limited thereto as long as it is conventionally practiced in the art.

In one example of the present disclosure, in step (c) above, the sulfide-based solid electrolyte film obtained in step (b) above may be dried.

The drying may be performed at 40°C to 90°C. Specifically, the drying temperature may be 40°C or higher, 45°C or higher, 50°C or higher, 55°C or higher, or 60°C or higher, or 70°C or lower, 75°C or lower, 80°C or lower, 85°C or lower, or 90°C or lower. If the drying temperature is below 40°C, the amount of residual solvent may be excessive, and if it is above 90°C, binder denaturation may occur due to the high drying temperature.

After the sulfide-based solid electrolyte film is formed on the positive electrode active material layer or the negative electrode active material layer, a negative electrode or positive electrode can be stacked on the other side of the sulfide-based solid electrolyte film and pressurized to produce an all-solid-state battery.

The pressurization may be carried out within a range of a pressure that does not cause deformation or breakage of the positive electrode, the sulfide-based solid electrolyte film, and the negative electrode and allows a good bond between them. For example, the pressure when the pressurization may be 300 MPa to 700 MPa, and more specifically, the pressure may be 300 MPa or more, 350 MPa or more, 400 MPa or more, 600 MPa or less, 650 MPa or less, or 700 MPa or less. When the pressure is less than 300 MPa, the interfacial resistance of the positive electrode or negative electrode and the sulfide-based solid electrolyte film may increase, and when the pressure is greater than 700 MPa, the positive electrode, negative electrode, or sulfide-based solid electrolyte film may be deformed or broken.

### Battery Module

The present disclosure also relates to a battery module comprising the all-solid-state battery as a unit cell, a battery pack comprising the battery module, and a device comprising the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like. Hereinafter, preferred examples of the present disclosure are described for the purpose of illustrating the present disclosure, but it will be apparent to those skilled in the art that various changes and modifications are possible within the scope of the present disclosure and the technical idea, and that such changes and modifications fall within the scope of the appended patent claims.

### [Mode for Practicing the Invention]

Hereinafter, preferred examples of the present disclosure are described for the purpose of illustrating the present disclosure, but it will be apparent to those skilled in the art that various changes and modifications are possible within the scope of the present disclosure and the technical idea, and that such changes and modifications fall within the scope of the appended patent claims.

**[Table 1]**

| | Negative electrode impregnation process | | | Method for forming a sulfide-based solid electrolyte film | After drying, content of residual non-polar solvent in the negative electrode (ppm) |
|---|---|---|---|---|---|
| | Solvent | | Impregnation | | |
| | Name | Dielectric Constant | | | |
| Example 1 | BB | 5 | o | Overcoating | 443 |
| Comparative Example 1 | - | - | X | Overcoating | 32 |
| Comparative Example 2 | EC | 85 | o | Overcoating | 0 |
| Comparative Example 3 | BB | 5 | X | Transcription | 7 |
| Note 1) BB: butyrate | | | | | |
| Note 2) EC: ethylene carbonate | | | | | |

### Experimental Example: Selecting solvents that do not cause side reactions with a sulfide-based solid electrolyte

As a solvent for impregnating an electrode adjacent to a sulfide-based solid electrolyte film, experiments were conducted to identify solvents that do not cause side reactions with a sulfide-based solid electrolyte.

A sulfide-based solid electrolyte, Li₆PS₅Cl, was dispersed in a non-polar solvent, butyrate (BB), and a polar solvent, ethylene carbonate (EC), to observe the color change. If there is no color change, there is no side effect, and if there is a color change, there is a side effect.

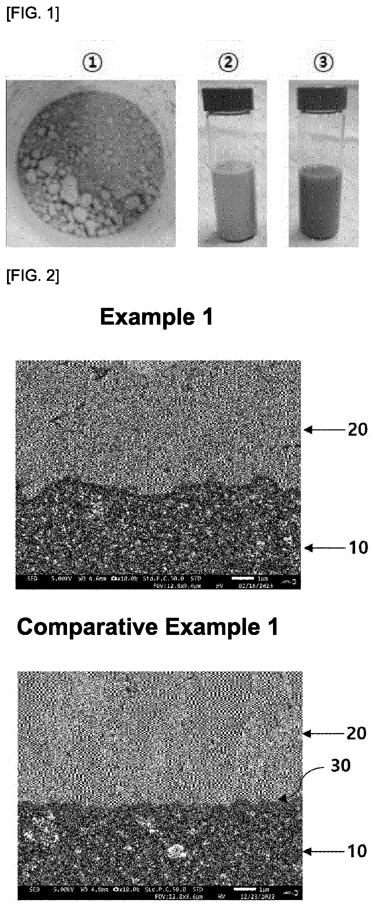

FIG. 1 is a photograph illustrating the results of an experiment to select a solvent that does not cause side reactions with a sulfide-based solid electrolyte in the Experimental Example of the present disclosure.

Referring to FIG. 1, a sulfide-based solid electrolyte powder (①) shows no color change when dispersed in butyrate (BB), a non-polar solvent (②), and a color change when dispersed in ethylene carbonate (EC), a polar solvent (③).

From this, it was found that butyrate (BB), a non-polar solvent, does not react with a sulfide-based solid electrolyte and is therefore a suitable solvent for impregnating an electrode adjacent to a sulfide-based solid electrolyte film in an all-solid-state battery.

### Example 1

### (1) Manufacturing a negative electrode

Carbon black as a conductive material and polyvinylidene fluoride (PVDF) as a binder were mixed with N-Methyl-2-pyrrolidone (NMP) solvent to prepare a slurry for forming an anodeless coating layer. In this case, the conductive material and binder were used in a 90:10 weight ratio, and the slurry was prepared to be 45% by weight based on solids content.

The slurry for forming the anodeless coating layer was coated on one side of the stainless steel (SS) substrate, and then vacuum dried at 100 °C for 10 hours to form the anodeless coating layer.

Using a micropipette, a non-polar solvent, butyrate (BB, dielectric constant: 5), was impregnated into the anodeless coating layer by scattering and wetting the anodeless coating layer with the non-polar solvent.

### (2) Forming a sulfide-based solid electrolyte film by overcoating

Li₆PS₅Cl with an argyrodite structure as a sulfide-based solid electrolyte and acrylonitrile butadiene rubber (NBR) as a binder were mixed in a non-polar solvent, butyrate, in a weight ratio of 90:10, with 50% by weight solids, to prepare a slurry for forming a sulfide-based solid electrolyte film.

The slurry for a sulfide-based solid electrolyte film was applied on the anodeless coating layer, overcoated with a bar coater, and vacuum dried at 70°C for 5 hours to form a sulfide-based solid electrolyte film.

### (3) Manufacturing an all-solid-state battery

The positive electrode was stacked on the sulfide-based solid electrolyte film and pressurized at 600 MPa to produce an all-solid-state battery. The positive electrode was prepared by mixing a positive electrode active material (LiN_{0.8}Co_{0.1}Mn_{0.1}O₂, NCM 811), a conductive material (carbon fiber), a sulfide-based solid electrolyte (Li₆PS₅Cl), and a binder (polytetrafluoroethylene, PTFE) in a weight ratio of 84:0.2:14.8:1, and applying a positive electrode active material layer containing the above mixture to the positive electrode current collector, Al foil, and rolling the positive electrode. The residual non-polar solvent content within the negative electrode was 443 ppm.

### Comparative Example 1

The procedure was performed as in Example 1, except that the anodeless coating layer was not impregnated with a non-polar solvent. The residual non-polar solvent content in the negative electrode was 32 ppm.

### Comparative Example 2

The all-solid-state battery was prepared in the same manner as in Example 1, except that the anodeless coating layer was impregnated with ethylene carbonate (EC, dielectric constant 85), a polar solvent, instead of butyrate, a non-polar solvent. Due to the side reactions of the polar solvent with the overcoated sulfide-based solid electrolyte film, it was not possible to evaluate the battery performance and measure the solvent content.

### Comparative Example 3

An all-solid-state battery was prepared by the same method as in Example 1, except that the anodeless coating layer was prepared without impregnation with a non-polar solvent, the slurry for forming a sulfide-based solid electrolyte film was formed on the PET substrate, and the anodeless coating layer and the sulfide-based solid electrolyte film were pressurized and bonded. By the bonding, the transfer process was carried out so that a sulfide-based solid electrolyte film was formed on the anodeless coating layer. In this case, the anodeless coating layer is not exposed to non-polar solvents. The residual non-polar solvent content was 7 ppm.

### Experimental Example 1:

For the all-solid-state batteries prepared in the Examples and Comparative Examples, the contents of residual non-polar solvent in the negative electrode were compared.

After fabrication of the all-solid-state battery, the content of non-polar solvent remaining in the anodeless coating layer of the negative electrode was measured by Headspace GC/FID (Headspace Gas Chromatography with Flame lonization Detection) analysis. The sample for solvent measurement was shaped to include a positive electrode and a negative electrode, and a sulfide-based solid electrolyte film formed therebetween by overcoating.

As shown in Table 1 above, Example 1 measured a relatively higher content of residual non-polar solvent in the negative electrode compared to Comparative Examples 1 to 3.

In Comparative Example 1, the process of impregnating the anodeless coating layer with a non-polar solvent was not performed, but the residual non-polar solvent was measured. This is due to the non-polar solvent used in the preparation of the slurry during the formation of the sulfide-based solid electrolyte film by overcoating.

Furthermore, in Comparative Example 2, where the anodeless coating layer was not impregnated with a non-polar solvent, but with a polar solvent, it was not possible to evaluate the battery performance and measure the solvent content due to the side reaction of the polar solvent with the overcoated sulfide-based solid electrolyte film.

Furthermore, in Comparative Example 3, the anodeless coating layer was not impregnated with a non-polar solvent, but the anodeless coating layer and the sulfide-based solid electrolyte film were formed respectively and then bonded, and a small amount of residual non-polar solvent was measured. The small amount of residual non-polar solvent in the negative electrode was contained in the sulfide-based solid electrolyte film.

### Experimental Example 2:

In the all-solid-state batteries prepared in Example 1 and Comparative Example 1, respectively, the interfaces of the anodeless coating layer and the sulfide-based solid electrolyte film were observed. The interfaces were observed using a scanning electron microscope (SEM, JEOL, IT-800).

FIG. 2 is an SEM photograph of the interfaces of the anodeless coating layer and the sulfide-based solid electrolyte film in all-solid-state batteries prepared in Example 1 and Comparative Example 1 of the present disclosure.

Referring to FIG. 2, it can be seen that compared to Example 1, there are a number of particulate agglomerates (30) at the interface of the anodeless coating layer (10) and the sulfide-based solid electrolyte film (20). These particulate agglomerates are accumulated at the interface during the overcoating of the slurry in the formation of the sulfide-based solid electrolyte film, as the components of the slurry are squeezed out and try to penetrate the anodeless coating layer. The components of the slurry accumulated at the interface can be mainly small and light electrolyte particulates, binders, etc.

On the other hand, in Example 1, it is difficult to observe such particulates at the interface, which is due to the fact that the anodeless coating layer in Example 1 is impregnated with butyrate (BB), a non-polar solvent, which prevents the components of the slurry from being squeezed out and penetrating the anodeless coating layer.

In the case of Comparative Example 2, a polar solvent, ethylene carbonate (EC), was used instead of the non-polar solvent, butyrate (BB), used in Example 1, but it was impossible to observe the interface because a side reaction occurred between the polar solvent, ethylene carbonate (EC), impregnated in the anodeless coating layer and the sulfide-based solid electrolyte film overcoated on the anodeless coating layer, resulting in decomposition.

Although the present disclosure has been described above by way of limited examples and drawings, the invention is not limited thereby, and various modifications and variations may be made by those having ordinary skill in the art, within the technical idea of the invention and the equivalent scope of the patent claims set forth below.

### [Reference Numerals]

10: Anodeless coating layer
20: Sulfide-based electrolyte film
30: Particulate agglomerates

## Claims

1. An all-solid-state battery comprising a positive electrode, a negative electrode, and a sulfide-based solid electrolyte film interposed therebetween,
wherein a positive electrode active material layer or a negative electrode active material layer included in the positive electrode or the negative electrode is solvent-free, or comprises a non-polar solvent,
wherein a dielectric constant of the non-polar solvent is 10 or less.

2. The all-solid-state battery according to claim 1,
wherein the non-polar solvent comprises at least one selected from the group consisting of toluene, xylene, anisole, benzene, hexane, heptane, nonane, decane, dibromomethane, dichloromethane, chloroform, butyrate, and acetate.

3. The all-solid-state battery according to claim 1,
wherein the non-polar solvent is included in an amount of 100 to 2000 ppm.

4. The all-solid-state battery according to claim 1,
wherein the sulfide-based solid electrolyte film comprises a sulfide-based solid electrolyte with an argyrodite structure.

5. The all-solid-state battery according to claim 1,
wherein the sulfide-based solid electrolyte comprises Li₇₋ₓPS₆₋ₓAₓ, where A is Cl, Br, I, Sn, or a combination thereof, and x is 0≤x≤2.

6. The all-solid-state battery according to claim 1,
wherein the negative electrode active material layer comprises lithium metal, or an anodeless coating layer.

7. A method of manufacturing an all-solid-state battery, comprising (a) impregnating the positive electrode active material layer or the negative electrode active material layer contained in the positive electrode or the negative electrode with a non-polar solvent;
(b) forming a sulfide-based solid electrolyte film by overcoating a slurry for forming a sulfide-based solid electrolyte film on the positive electrode active material layer or the negative electrode active material layer obtained in step (a) above; and
(c) drying the sulfide-based solid electrolyte film obtained in step (b),
wherein the non-polar solvent has a dielectric constant of 10 or less.

8. The method of manufacturing an all-solid-state battery according to claim 7,
wherein the slurry for forming a sulfide-based solid electrolyte film is prepared by mixing a sulfide-based solid electrolyte with a solvent.

9. The method of manufacturing an all-solid-state battery according to claim 8,
wherein the solvent is a non-polar solvent,
wherein the non-polar solvent has a dielectric constant of 10 or less.

10. The method of manufacturing an all-solid-state battery according to claim 8,
wherein the slurry further comprises a binder.

11. The method of manufacturing an all-solid-state battery according to claim 7,
wherein the overcoating is performed by bar coating, roll coating, gravure coating, doctor blade coating, slot die coating, slurry coating, or extrusion coating.

12. The method of manufacturing an all-solid-state battery according to claim 7,
wherein the drying in step (c) is performed at 40°C to 90°C.
